# EUROPEAN PATENT APPLICATION

(11) **EP 0 721 161 A2**
(43) Date of publication of application: **10.07.1996**
(21) Application number: 95308878.8
(22) Date of filing: 07.12.1995
(51) Int. Cl.: G06F 9/44

(54) **Managing dynamic state variables of reactive objects**

(30) Priority: 04.01.1995 US 368190
(71) Applicant: International Business Machines Corporation, Armonk, N.Y. 10504 (US)
(72) Inventor: Nash, Simon C., Chilbolton, SO20 6AB (GB); Nurcan, Coskun, Austin, Texas 78758 (US); Renshaw, David S., Winchester, SO22 6NN (GB)
(74) Representative: Ling, Christopher John

(57) **Abstract**

A method and system for setting the scope of a dynamic state variable for a reactive object (700) within an object oriented environment. A data processing system according to the present invention includes a number of reactive objects (700). Each reactive object (700) includes a slot containing a script action. The same script action object (704) may be included in the slots for many reactive objects (700). Additionally, each reactive object (700) is associated with a context dictionary (702). The context dictionary (702) includes a dynamic state variable. Events received at a particular reactive object (700) for a slot containing the script action object (704) triggers execution of the script action object (704) utilizing the dynamic state variable located in the context dictionary (702) associated with the reactive object (700) receiving the event.

## Description

### Technical Field:

The present invention relates to an improved data processing system, and in particular to a method and system for creating dynamic state variables. Still more particularly the present invention relates to a method and system for creating a scope for dynamic state variables reactive objects.

### Description of the Related Art:

The development of application and system software for data processing systems has traditionally been a time consuming task. The field of software engineering has attempted to overcome the limitations of traditional techniques by proposing new, more efficient software development models. Object oriented programming has emerged as a promising technology that will allow rapid development, implementation and customization of objects. Each new object has certain data attributes and processes or methods that operate on that data. Data is said to be "encapsulated" by an object and can only be modified by the object methods which are invoked by sending a message to an object identifying the method and supplying any needed arguments.

Object oriented systems have two important properties in addition to encapsulation. "Inheritance" is the ability to derive a new object from an existing object and inherit all properties, including methods and data structure, from the existing object. The new object may have certain unique features which are supplied as overrides or modifications to the existing class. For example, a new subclass needs to specify only the functions and data that distinguish that class from the existing more general class.

The ability to override an existing method description enables polymorphism, the ability to have a single message to an object be processed in different ways depending on the object itself.

Inheritance and polymorphism create a powerful structure for implementing new software systems. The software developer does not have to develop each piece of a system, he or she need only specify the unique features of the system.

The power of object oriented systems is realized through the development of system "frameworks." A framework is a collection of base classes that can be used by a system implementor to create a final systems product. The framework is defined and developed to work together as a system. Conceptually, the framework is much like a set of standard hardware components used by computer hardware builders. Each of the components has certain defined functions and interfaces and the engineer assembles these components according to a particular design to create a unique hardware system.

One object oriented programming system is the System Object Model (SOM). More information on SOM can be found in SOMobjects Developer Toolkit User's Guide, version 2.0, June 1993, available from International Business Machines Corporation. More information on object oriented systems generally may be found in *Booch*, Object Oriented Design With Applicants, the *Benjamin/Cummings Publishing Company, Inc.* 1991.

Normally, a class of an object defines its state variable and no opportunity exists to add additional state variables. The methods and states are fixed in the class and in all instances of the class. If dynamic behavior is added to instances of the class in the form of actions to extend behavior of the instances, dynamic state variables may be required. As a result, it would be advantageous to have a method and system for managing dynamic state variables.

### DISCLOSURE OF THE INVENTION

The present invention provides a method and system for setting the scope of a dynamic state variable for a reactive object within an object oriented environment. A data processing system according to the present invention includes a number of reactive objects. Each reactive object may include slots containing script action objects. The same script action object may be included in the slots for many reactive objects. Additionally, each reactive object is associated with a context dictionary. The context dictionary includes dynamic state variables. Events received at a particular reactive object for a slot containing the script action object triggers execution of the script action object utilizing the dynamic state variables located in the context dictionary associated with the reactive object receiving the event.

According to the present invention, execution of a script action object located in different reactive objects would result in the script action object using the dynamic state variables associated with the particular reactive object. In this manner, the scope of a dynamic state variable for a reactive object is set by the reactive object.

### BRIEF DESCRIPTION OF THE DRAWINGS

The invention will now be described by way of example only, with reference to the accompanying drawings, in which:
**Figure 1** depicts a data processing system in the form of a personal computer in which the present invention can be employed is depicted;
**Figure 2** is a block diagram of a personal computer system illustrating the various components of personal computer system in accordance with the present invention;
**Figure 3** is a diagram of objects in an object oriented system depicted in accordance with a preferred embodiment of the present invention;
**Figure 4** depicts a class hierarchy for dynamic state scopes in reactive objects in accordance with a preferred embodiment of the present invention;
**Figure 5** is a diagram of components within a visual builder system depicted in accordance with a preferred embodiment of the present invention;
**Figure 6** is a pictorial diagram of a reactive object illustrated in accordance with a preferred embodiment of the present invention;
**Figure 7** is a block diagram of relationships between reactive objects, context dictionaries, and action scripts depicted in accordance with a preferred embodiment of the present invention;
**Figure 8** is a flowchart of a process for setting up a reactive object and associating it with a context dictionary depicted in accordance with a preferred embodiment of the present invention;
**Figure 9** is a flowchart for accessing a variable within a context dictionary for a reactive object by a direct method call depicted in accordance with a preferred embodiment of the present invention;
**Figure 10** is a flowchart of a process for updating a variable in a context dictionary for a reactive object by a direct method call depicted in accordance with a preferred embodiment of the present invention; and
**Figure 11** is a flowchart of a process involving the triggering of an action script for a reactive object depicted in accordance with a preferred embodiment of the present invention.

### DETAILED DESCRIPTION OF THE INVENTION

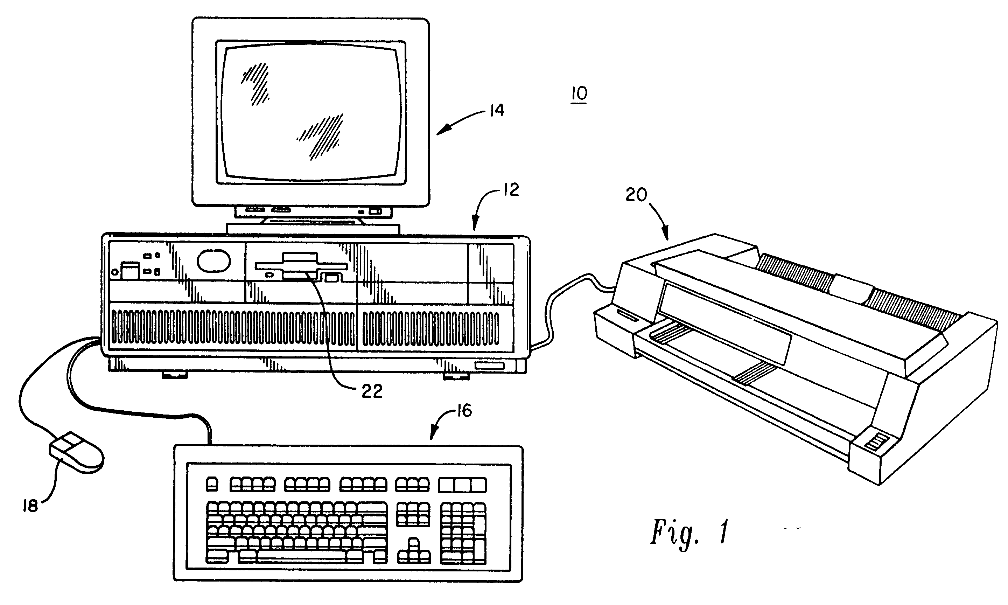

Referring now to the figures, and in particular to **Figure 1**, a data processing system, personal computer system **10**, in which the present invention can be employed is depicted. As shown, personal computer system **10** comprises a number of components, which are interconnected together. More particularly, a system unit **12** is coupled to and can drive an optional monitor **14** (such as a conventional video display). A system unit **12** also can be optionally coupled to input devices such as a PC keyboard **16** or a mouse **18**. Mouse **18** includes right and left buttons (not shown). The left button is generally employed as the main selector button and alternatively is referred to as the first mouse button or mouse button 1. The right button is typically employed to select auxiliary functions as explained later. The right mouse button is alternatively referred to as the second mouse button or mouse button 2. An optional output device, such as a printer **20**, also can be connected to the system unit **12**. Finally, system unit **12** may include one or more mass storage devices such as the diskette drive **22**.

As will be described below, the system unit **12** responds to input devices, such as PC keyboard **16**, the mouse **18**, or local area networking interfaces. Additionally, input/output (I/O) devices, such as floppy diskette drive **22**, display **14**, printer **20**, and local area network communication system are connected to system unit **12** in a manner well known. Of course, those skilled in the art are aware that other conventional components also can be connected to the system unit **12** for interaction therewith. In accordance with the present invention, personal computer system **10** includes a system processor that is interconnected to a random access memory (RAM), a read only memory (ROM), and a plurality of I/O devices.

In normal use, personal computer system **10** can be designed to give independent computing power to a small group of users as a server or a single user and is inexpensively priced for purchase by individuals or small businesses. In operation, the system processor functions under an operating system, such as IBM's OS/2 operating system or DOS. OS/2 is a registered trademark of International Business Machines Corporation. This type of operating system includes a Basic Input/Output System (BIOS) interface between the I/O devices and the operating system. BIOS, which can be stored in a ROM on a motherboard or planar, includes diagnostic routines which are contained in a power on self test section referred to as POST.

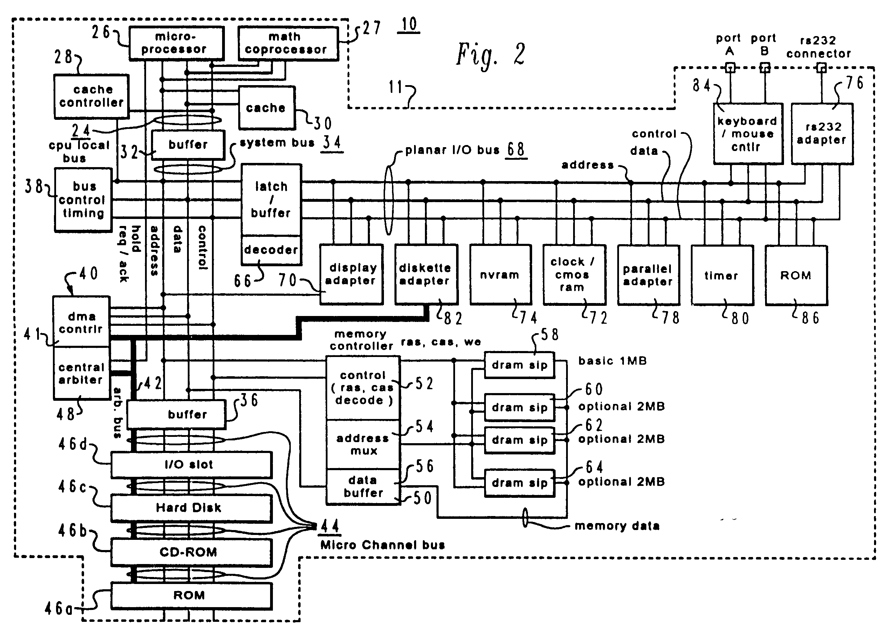

Prior to relating the above structure to the present invention, a summary of the operation in general of personal computer system **10** is now given. Referring to **Figure 2**, there is shown a block diagram of personal computer system **10** illustrating the various components of personal computer system **10** in accordance with the present invention. **Figure 2** further illustrates components of planar **11** and the connection of planar **11** to I/O slots **46a-46d** and other hardware of personal computer system **10**. Connected to planar **11** is the system central processing unit (CPU) **26** comprised of a microprocessor which is connected by a high speed CPU local bus **24** through a bus controlled timing unit **38** to a memory control unit **50** which is further connected to a volatile random access memory (RAM) **58**. While any appropriate microprocessor can be used for CPU **26**, one suitable microprocessor is the Pentium microprocessor, which is sold by Intel Corporation. "Pentium" is a trademark of Intel Corporation.

While the present invention is described hereinafter with particular reference to the system block diagram of **Figure 2**, it should be understood that it is contemplated that the apparatus and methods in accordance with the present invention may be used with other hardware configurations of the planar board. For example, the system processor could be an Intel 80286, 80386, or 80486 microprocessor. These particular microprocessors can operate in a real addressing mode or a protected addressing mode. Each mode provides an addressing scheme for accessing different areas of the microprocessor's memory.

Returning now to **Figure 2**, CPU local bus **24** (comprising data, address and control components) provides for the connection of CPU **26**, an optional math coprocessor **27**, a cache controller **28**, and a cache memory **30**. Also coupled on CPU local bus **24** is a buffer **32**. Buffer **32** is itself connected to a slower speed (compared to the CPU local bus) system bus **34**, also comprising address, data and control components. System bus **34** extends between buffer **32** and a further buffer **36**. System bus **34** is further connected to a bus control and timing unit **38** and a Direct Memory Access (DMA) unit **40**. DMA unit **40** is comprised of a central arbitration unit **48** and a DMA controller **41**. Buffer **36** provides an interface between the system bus **34** and an optional feature bus such as the Micro Channel bus **44**. "Micro Channel" is a trademark of International Business Machines Corporation. Connected to bus **44** are a plurality of I/O slots **46a-46d** for receiving Micro Channel adapter cards which may be further connected to an I/O device or memory. In the depicted example, I/O slot **46a** has a hard disk drive connected to it; I/O slot **46b** has a CD-ROM drive connected to it; and I/O slot **46c** has a ROM on an adapter card connected to it. Other devices, such as a modem may be connected to an I/O slot. An arbitration control bus **42** couples the DMA controller **41** and central arbitration unit **48** to I/O slots **46** and diskette adapter **82**. Also connected to system bus **34** is a memory control unit **50** which is comprised of a memory controller **52**, an address multiplexer **54**, and a data buffer **56**. Memory control unit **50** is further connected to a random access memory as represented by RAM module **58**. Memory controller **52** includes the logic for mapping addresses to and from CPU **26** to particular areas of RAM **58**. While the personal computer system **10** is shown with a basic 1 megabyte RAM module, it is understood that additional memory can be interconnected as represented in **Figure 2** by the optional memory modules **60** through **64**.

A further buffer **66** is coupled between system bus **34** and a planar I/O bus **68**. Planar I/O bus **68** includes address, data, and control components respectively. Coupled along planar bus **68** are a variety of I/O adapters and other peripheral components such as display adapter **70** (which is used to drive an optional display **14**), a clock **72**, nonvolatile RAM **74** (hereinafter referred to as "NVRAM"), a RS232 adapter **76**, a parallel adapter **78**, a plurality of timers **80**, a diskette adapter **82**, a PC keyboard/mouse controller **84**, and a read only memory (ROM) **86**. The ROM **86** includes BIOS which provides the user transparent communications between many I/O devices.

Clock **72** is used for time of day calculations. NVRAM **74** is used to store system configuration data. That is, the NVRAM will contain values which describe the present configuration of the system. For example, NVRAM **74** contains information which describe the capacity of a fixed disk or diskette, the type of display, the amount of memory, etc. Of particular importance, NVRAM **74** will contain data which is used to describe the system console configuration; i.e., whether a PC keyboard is connected to the keyboard/mouse controller **84**, a display controller is available or the ASCII terminal is connected to RS232 adapter **76**. Furthermore, these data are stored in NVRAM **74** whenever a special configuration program is executed. The purpose of the configuration program is to store values characterizing the configuration of this system to NVRAM **76** which are saved when power is removed from the system.

Connected to keyboard/mouse controller **84** are ports A and B. These ports are used to connect a PC keyboard (as opposed to an ASCII terminal) and mouse to the PC system. Coupled to RS232 adapter unit **76** is an RS232 connector. An optional ASCII terminal can be coupled to the system through this connector.

Specifically, personal computer system **10** may be implemented utilizing any suitable computer such as the IBM PS/2 computer or an IBM RISC SYSTEM/6000 computer, both products of International Business Machines Corporation, located in Armonk, New York. "RISC SYSTEM/6000" and "PS/2" are trademarks of International Business Machines Corporation.

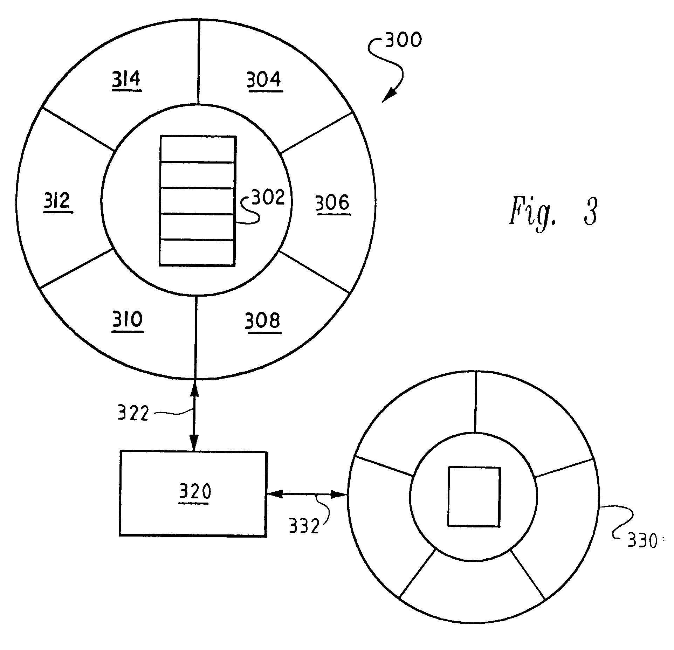

With reference to **Figure 3**, a diagram of objects in an object oriented system is depicted in accordance with a preferred embodiment of the present invention. An object encapsulates data and the methods needed to operate on that data. Objects can be represented by a "doughnut diagram" such as shown in **Figure 3**. Object data is shown in the center **302** surrounded by the applicable methods **304** to **314**. Data **302** may be modified only by the methods of that object. Methods **304-314** are invoked by receiving messages from other objects. A typical object oriented system will have a message router **320** that routes messages between objects. Thus, object **330** causes Method C **308** to be invoked by sending a message **332** to message router **320** that in turn sends message **322** to Method C **308** of object **300**.

Object frameworks are constructed to provide a set of objects for application and system developers to use to construct a delivered system. The IBM System Object Model (SOM) framework, for example, provides a language independent set of objects for use in systems development.

Objects are grouped into classes of related objects. The class description contains information relevant to all objects in a class, including a description of instance variables maintained by each of the objects and the available object methods. An object instance is created (or "instantiated") based on that information and has the properties defined in the object class. For example, the object class DOG can include the instance variables "dog_type" and "dog_name" and a "bark" method implementing the response to a bark message. An instance of dog, e.g. ROVER, will maintain the type and name instance variables for itself and will respond to the bark message.

Abstract classes are used to describe the interfaces and methods expected to be used by a class without providing detail on the implementation of those methods. Abstract classes are useful in frameworks where the implementation details are to be left to the implementor. Concrete classes are created as subclasses of abstract classes and implement those classes.

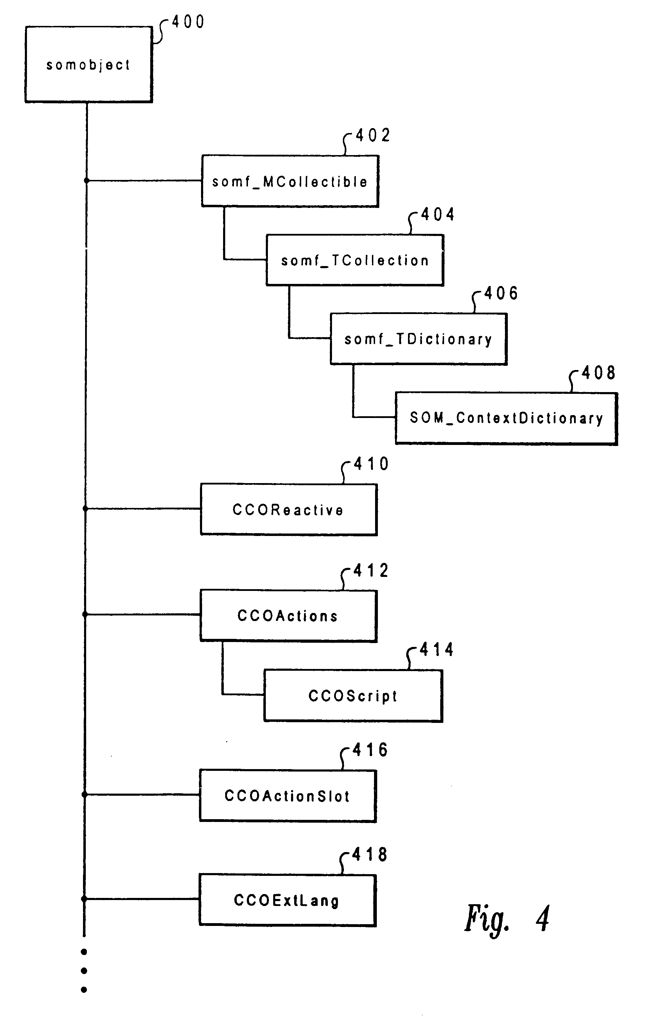

Classes in an object oriented system are often derived from a single base class. This base class is named "SOMObject" in the IBM system object model. **Figure 4** depicts a class hierarchy for dynamic state scopes in reactive objects in accordance with a preferred embodiment of the present invention.

The class SOMObject **400** is a base class having a subclass "somf_MCollectible" **402** with "somf_TCollection" **404** being a subclass of somf_MCollectible **402**. Class "somf_TDictionary" **406** is a subclass of somf_TCollection **404**. These classes are classes found in IBM System Object Model and are collection classes. Class "SOM_ContextDictionary" **408** is a class created in accordance with a preferred embodiment of the present invention. A context dictionary is a dynamically extensible collection of data which associates names (i.e., character strings), types (i.e., integer, floating, string, and object), and values. The hierarchy of classes also includes class "CCOReactive" **410**, which is a class for reactive objects; class "CCOActions" **412**, which is a class for action objects with class "CCOScript" **414** being a subclass for script action objects. Class "CCOActionSlot" **416** is the class for action slots with class "CCOExtLang" **418** being a class for the language processor (e.g., interpreter) for the scripting language used by script action objects.

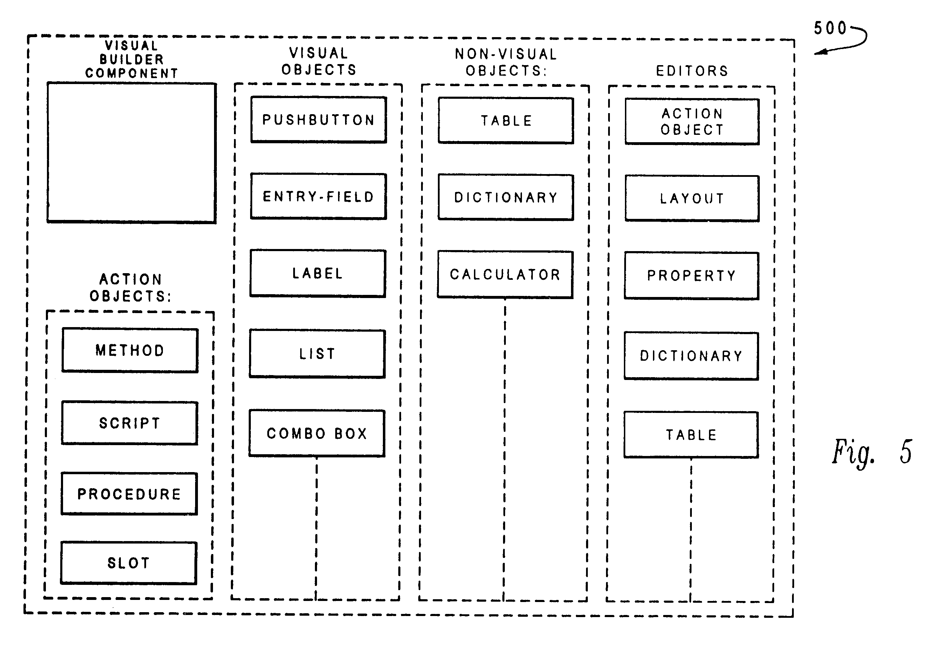

With reference now to **Figure 5**, a diagram of components within a visual builder system is depicted in accordance with a preferred embodiment of the present invention. As can be seen, visual builder system **500** includes a visual builder component in which a user may manipulate visual object components, such as push button, entry field, label, list, and combination box, etc. A number of visual builder systems are currently available for generating visual objects in object oriented programming systems. Non-visual objects include objects such as tables, dictionaries, calculators, etc. Various editor components, such as action object, layout, property, dictionary, and table, etc. may be available to a user. In a visual builder system, such as visual builder system **500**, employing an object oriented approach, each element of the graphic user interface such as a window, a button, or an entry field is treated as an object. Each object supports methods (such as resize), data (such as color), and events (such as button-was-pressed).

The visual builder component is employed to create applications via a graphical user interface ("GUI"). The visual builder component provides a tool palette containing visual and non-visual objects. The user can use drag/drop operations to create and update application user interfaces visually through a layout editor. Visual builder system **500** provides editors to edit or customize different features of an application. For example, property editor may be employed to change the properties of objects, such as the color of a label object or text of a push button object. The dictionary editor is used to populate a dictionary with integer, real, string, and object values. A table editor may be employed to create a table of numbers. The label editor may be used to lay out visual objects and compound applications.

Action objects, such as method, script, procedure, and slot, are provided to extend the behavior of visual and non-visual objects. The action object editor is used to create action objects and to add them to the visual and non-visual objects. Visual objects are employed to create the GUI for complex applications. Non-visual objects are employed to create the data objects for the complex applications.

In object oriented systems, a "reactive object" is an extensible object that can be used to create applications in a visual way. In particular, a reactive object is an object having action slots containing action objects. A reactive object can react to events by triggering action objects contained within its action slots. An action object is an object that performs some action when a reactive object raises an event. Possible actions are, for example, to run a script, send a message, call a function, or raise an event. Reactive objects have a number of action slots. An "action slot" is a named container that holds behavior for events raised by a reactive object. This behavior consist of zero or more action objects. Each action slot holds a list of action objects. The creation and assignment of action objects to action slots can be performed in a visual way in a application builder using a graphical user interface, also called a visual builder. Action slots that belong to a reactive object represent the events to which the reactive object can react. The behavior of a reactive object for a given event is determined by the action objects contained within the corresponding action slot. One of the most powerful action objects is a "script action object". A "script action object" holds a procedural/object oriented code that is interpreted when the action object is triggered. The execution of such scripts may create side effects through dynamic state variables.

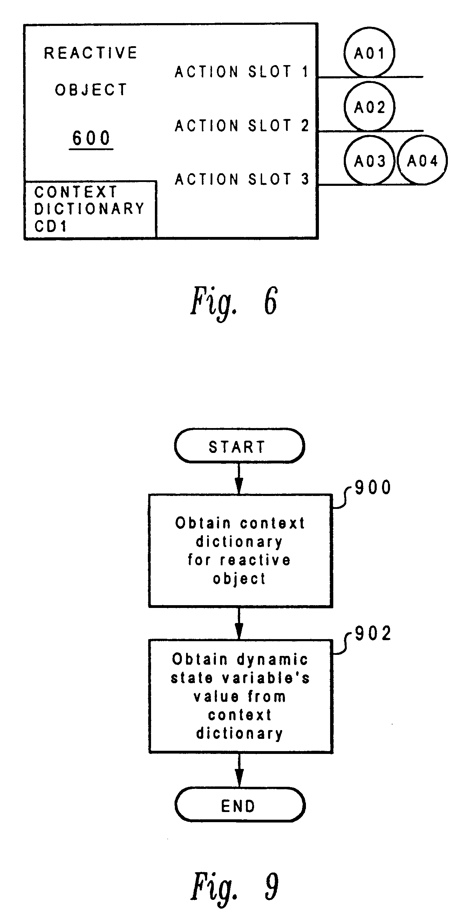

Referring now to **Figure 6**, a pictorial diagram of a reactive object is illustrated in accordance with a preferred embodiment of the present invention. Reactive object **600** includes action slots 1-3. As can be seen in the depicted example, action slot 1 includes action object AO1, action slot 2 contains action object AO2, and action slot 3 contains action objects AO3 and AO4. An action slot is a container object that may contain zero or more action objects. In turn, action objects are objects that are triggered in response to an event to perform some sort of processing. An event associated with an action slot raised by the reactive object containing the action slot triggers all action objects contained in that action slot. In addition, reactive object **600** includes a context dictionary CD1. The action objects may be various objects such as a method, script, or procedure. Different numbers of action slots and action objects may be employed other than the numbers depicted in **Figure 6**.

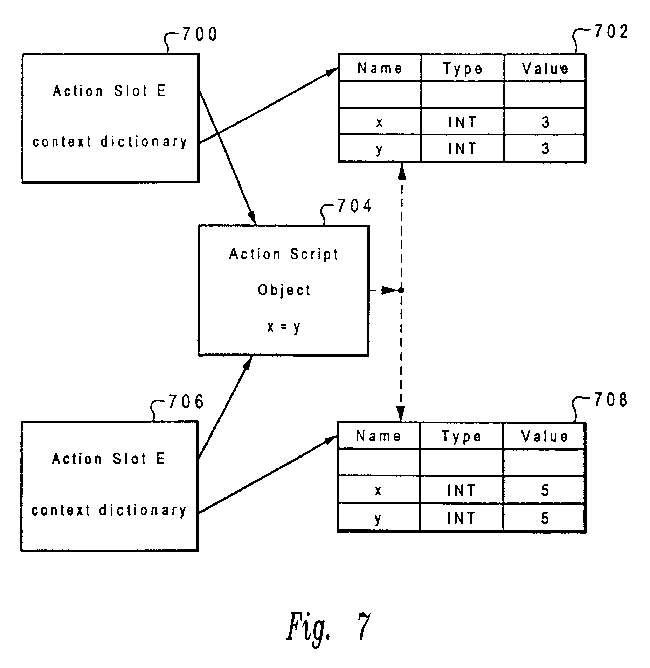

With reference now to **Figure 7**, a block diagram of relationships between reactive objects, context dictionaries, and action scripts are depicted in accordance with a preferred embodiment of the present invention. Reactive object **700** is associated with context dictionary **702**. This association is made through a method contained in reactive object **700** that allows it to associate with a context dictionary. Reactive object **700** also includes an action slot E for an action object that is script action object **704**. Also depicted in **Figure 7**, is reactive object **706**, which is associated with context dictionary **708**. Reactive object **706** also includes an action slot for an action object that is script action object **704**.

Context dictionaries **702** and **708** include dynamic state variables, integer variables x and y, in the depicted example. These dynamic state variables can be, for example, integer, float, or string. They also may be object variables. When action slot E in reactive object **700** is triggered, object **700** runs script action object **704**. The code in script action object **704** and context dictionary **702** are passed to a script language interface (not shown) for processing. Script language interfaces are well known in the art. The code in the action script is processed and the changes to the state variables are stored in context dictionary **702**.

In the depicted example, script action object **704** sets x equal to y. Thus, the current value of y becomes the value of x also with both of these values being stored in context dictionary **702**. As can be seen in the depicted examples, the values for x and y in context dictionary **702** are 3 while the values for x and y in context dictionary **708** are 5. The reactive objects **700** and **706** are restricted such that they modify only their own dynamic state variables, which are stored in context dictionary **702** and **708**, respectively. Thus, when action object **700** accesses variables x and y, no conflict occurs with a similar access by reactive object **706** because each access is limited to the value of the dynamic state variable located in the context dictionary associated with the reactive object.

As a result, the state variables in a context dictionary modified by an script action object are seen only by the reactive object with which it is associated and by any script action object that are run reactive object, but not by any other reactive object. In a programming system the "scope" of any data is the code that can access that data. That is to say the "scope" of dynamic state variables in a context dictionary is the reactive object with which the context dictionary is associated.

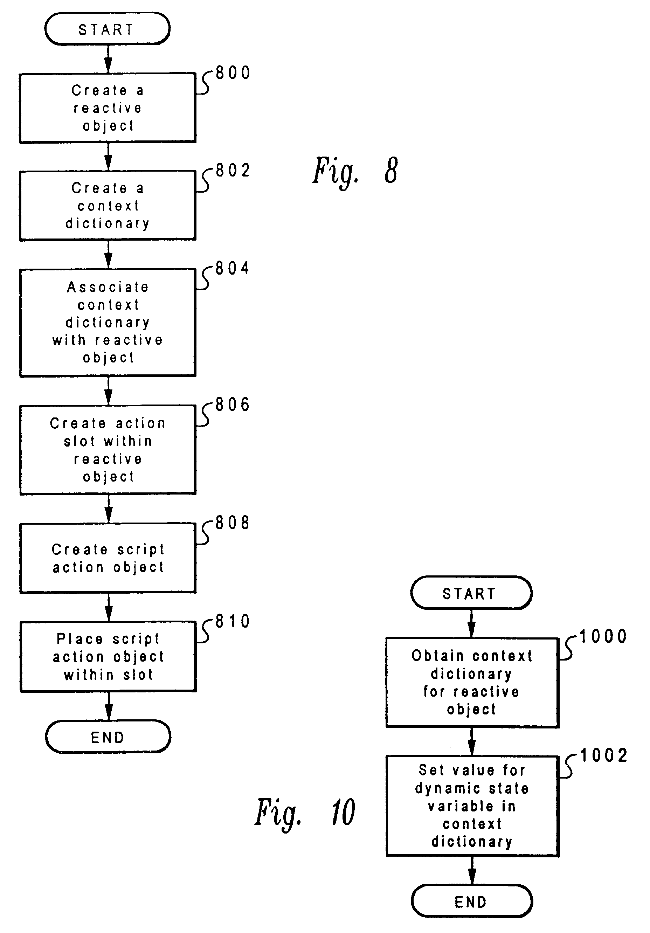

With reference now to **Figure 8**, a flowchart of a process for setting up a reactive object and associating it with a context dictionary for use with an script action object is depicted in accordance with a preferred embodiment of the present invention. The process begins by creating a reactive object (step **800**). Next, a context dictionary is created (step **802**). The process then associates the context dictionary with the reactive object (step **804**). An action slot is created within the reactive object (step **806**). An action object script, also called an "action script", is created for use with the reactive object (step **808**). The process then adds the script action object to the reactive object by placing it within the slot (step **810**).

With reference now to **Figure 9**, a flowchart for accessing a dynamic state variable within a context dictionary for a reactive object by a direct method call is depicted in accordance with a preferred embodiment of the present invention. Such an access of a variable within a context dictionary is accomplished directly instead of running a script in a script action object. The process begins by obtaining the context dictionary for the reactive object (step **900**). Then, the value for the selected dynamic state variable is obtained from the context dictionary (step **902**).

Referring next to **Figure 10**, a flowchart of a process for updating a dynamic state variable in a context dictionary for a reactive object by a direct method call is depicted in accordance with a preferred embodiment of the present invention. The process begins by obtaining the context dictionary for the reactive object (step **1000**). The process next sets the value for the selected dynamic state variable in the context dictionary (step **1002**).

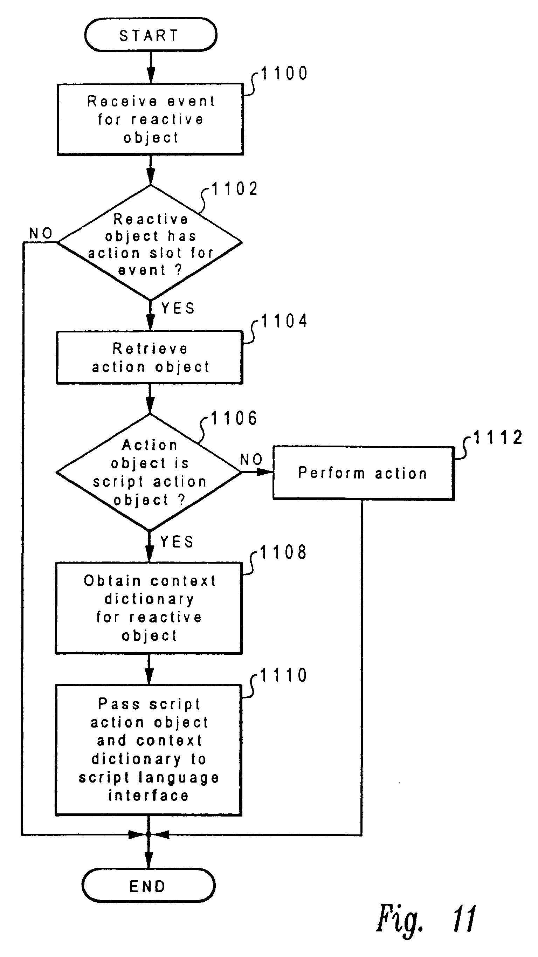

With reference now to **Figure 11**, a flowchart of a process involving the triggering of an script action object for a reactive object is depicted in accordance with a preferred embodiment of the present invention. The process begins by receiving an event for the reactive object (step **1100**). The process then determines whether the reactive object has an action slot for the received event (step **1102**). If an action slot exists for the received event, any action objects in the slot are retrieved (step **1104**). Next, a determination of whether each action object is a script action object is made (step **1106**). If the action object is a script action object, the process then obtains the context dictionary for the reactive object (step **1108**). The process then passes the script action object and the context dictionary to a script language interface for processing (step **1110**) with the process terminating thereafter. Referring again to step **1106**, if the action object in the slot is not a script action object, the process then performs the action defined by the action object (step **1112**) with the process terminating thereafter. With reference again to step **1102**, if the reactive object does not have an action slot for the event, the process terminates.

The processes depicted in **Figures 7-11** may be implemented by those of ordinary skill in the art within the data processing system depicted in **Figures 1** and **2**. The processes of the present invention also may be implemented in a program storage device that is readable by a data processing system, wherein the program storage device encodes data processing system executable instructions coding for the processes of the present invention. The program storage device may take various forms including, for example, but not limited to a hard disk drive, a floppy disk, an optical disk, a ROM, or an EPROM, which are known to those skilled in the art. The processes stored on a program storage device are dormant until activated by using the program storage device with the data processing system. For example, a hard drive containing data processing system executable instructions for the present invention may be connected to a data processing system; a floppy disk containing data processing system executable instructions for the present invention may be inserted into a floppy disk drive in the data processing system; or a ROM containing data processing system executable instructions for the present invention may be connected to the data processing system via a card or adapter connected to an I/O slot.

With the present invention, the reactive object determines the scope of the dynamic state variables. Additionally, the present invention provides a process for creating dynamic state variables for reactive objects that are accessible from script action objects contained within action slots for the reactive object. In this manner, the scope for dynamic state variables may be set using the present invention.

## Claims

1. A method for setting a scope for a dynamic state variable for a reactive object (700) in an object oriented system, the method comprising:
creating (802) a context dictionary (702), wherein the context dictionary includes a dynamic state variable; and
associating (804) the context dictionary with the reactive object, wherein the scope of the dynamic state variable is set by the reactive object.

2. A method as claimed in Claim 1, wherein the step of creating (800) a reactive object (700) includes creating (806) an action slot and placing (810) a script action object (704) in the slot, wherein an event triggering the script action object results in the script action object using the dynamic state variable in the context dictionary (702).

3. A method as claimed in Claim 1, wherein the object oriented system includes a second reactive object (706) and the method further comprises:
creating a second context dictionary (708), wherein the second context dictionary includes a second dynamic state variable; and
associating the second context dictionary with the second reactive object, wherein the scope of the second dynamic state variable is set by the second reactive object.

4. A method as claimed in Claim 3, wherein the step of creating a second reactive object (706) includes creating (806) an action slot and placing (810) the script action object (704) in the slot, wherein an event received for the slot triggers the script action object utilizing the second dynamic state variable.

5. A method as claimed in Claim 2, further comprising the step of
creating a plurality of reactive objects (700), wherein each reactive object within the plurality of reactive objects includes a slot; and
wherein said associating step associates (804), a context dictionary (702, 708) with each reactive object within the plurality of reactive objects, each context dictionary including a dynamic state variable and wherein an event received at a particular one of the plurality of reactive objects results in execution of the action script using the dynamic state variable in the context dictionary associated with the particular one of the plurality of reactive objects, wherein the scope of the dynamic state variable for each reactive object within the plurality of reactive objects is set by the reactive object.

6. A data processing system for setting a scope for a dynamic state variable for a reactive object (700) in an object oriented system, the data processing system comprising:
creation means for creating a context dictionary (702), wherein the context dictionary includes a dynamic state variable; and
association means for associating the context dictionary with the reactive object, wherein the scope of the dynamic state variable is set by the reactive object.

7. A data processing system as claimed in Claim 6, wherein the creation means includes means for creating an action slot and placing a script action object in the slot, wherein an event triggering the script action object results in the script action object using the dynamic state variable in the context dictionary.

8. A data processing system as claimed in Claim 6, wherein the object oriented system includes a second reactive object and the data processing system comprises:
second creation means for creating a second context dictionary (708), wherein the second context dictionary includes a second dynamic state variable; and
second association means for associating the second context dictionary with the second reactive object, wherein the scope of the second dynamic state variable is set by the second reactive object.

9. A data processing system as claimed in Claim 8, wherein the second creation means includes means for creating an action slot and placing the script action abject (704) in the slot, wherein an event received for the slot triggers the script action object utilizing the second dynamic state variable.

10. A data processing system as claimed in Claim 6 further comprising:
second creation means for creating a plurality of reactive objects (700), wherein each reactive object within the plurality of reactive objects includes a slot; and
wherein said association means associates a context dictionary (702, 708) with each reactive object within the plurality of reactive objects, each context dictionary includes a dynamic state variable and wherein an event received at a particular one of the plurality of reactive objects results in execution of the action script using the dynamic state variable in the context dictionary associated with the particular one of the plurality of reactive objects, wherein the scope of the dynamic state variable for each reactive object within the plurality of reactive objects is set by the reactive object.
